# EUROPEAN PATENT APPLICATION

(11) **EP 3 579 129 A1**
(43) Date of publication of application: **11.12.2019**
(21) Application number: 18175807.9
(22) Date of filing: 04.06.2018
(51) Int. Cl.: G06F 21/30, G06F 21/85

(54) **IMPROVED SECURITY OF USB FLASH DRIVES AND USB PORTS FOR THE INTRANET AND SECURE NETWORK USE**

(71) Applicant: Damnjanovic, Budimir, 81000 Podorica (ME); Damnjanovic, Desanka, 81000 Podorica (ME)
(72) Inventor: Damnjanovic, Budimir, 81000 Podorica (ME); Damnjanovic, Desanka, 81000 Podorica (ME)
(74) Representative: Banse & Steglich Patentanwälte PartmbB

(57) **Abstract**

The present invention relates to a communication device for enabling communication between a data processing unit and a portable memory device, comprising:
a port for receiving the portable memory device;
a reader device configured for contactlessly identifying an identification tag attached to the portable memory device,
a control unit configured to allow communication with the memory device via the port if the reader device has identified the memory device.

## Description

### BACKGROUND

### 1. Field of Invention

The present invention relates to methods, systems and devices in the field of computer mass storage devices, and pertains more particularly to security enhancements to solid-state USB connectable drives or "flash drives" towards prevention of acquired viruses and other malicious files downloaded from the Internet or other questionable sources, from spreading to non-infected host or client servers and systems operating on the secure network and closed-circuit Intranet. The said security USB drive enhancements in combination with radio frequency identification (RFID) technology prevents a given USB flash drive intended or dedicated solely for use on a secured network, public and private, to be shared in an infected computer connected to the Internet and then have the same USB flash drive plugged back into a secure network or Intranet network.

### 2. Description of Prior Art

The USB or Universal Standard Bus system architecture is comprised basically of USB ports (sockets or receptacles), host controller and numerous devices such as mouse, keyboards, flash drives, external hard/solid state drives, printer, personal media player, etc. The USB has become the standard connection method since it was designed to remove the need for adding expansion cards into computer's PCI or PVI-Express bus and improve plug-and-play capability by allowing devices to be hot-swapped or added to the system without rebooting the host controller or computer.

Removable data storage devices such as USB flash drives - which are also called thumb drives, USB sticks, jump drives, pen drives, keychain drives, tokens or simply USB drives- have been available since the early 2000s and their application is increasing rapidly with the prevalence of distributed computing, both in variety of models. The USB drives with their increased demand, large storage capacity in comparison to their small size, relative low cost, difficulty of tracking them (as they tend to be passed around like business cards at various technical and business meetings, seminars) and their widespread use comes serious problems of system compromise and security risks. Some types of system compromises are impossible to prevent, as they cannot be patched.

Military and civilian institutions which contain highly classified, confidential and critical national security data operating on the Intranet for example, are at considerable risk to data breaches when a virus or malware-contaminated USB drive is inserted carelessly in their otherwise secured host controllers/computers. These contaminated USB drives can then proceed to corrupt customer or employee data, business plans, intellectual property, trade secrets and financial information, thus causing great financial and reputational damage to the rightful owners of the said information. In addition, thumb drives may contain malicious firmware code that runs the basic communication protocols of USB peripheral devices such as keyboards, mouse, monitors, etc. For example, a computer can be tricked by an infected thumb drive into considering the thumb drive being a keyboard and thus accept the thumb drive's output of typed hacking commands such as keystrokes monitoring . Simple cursory scanning of the thumb drive by the IT security would not detect such infected thumb drive, as there may not be any trusted USB firmware against which to compare the code. This is because the devices may not have "code-signing" restriction, which is a security procedure that would make sure that any new code added to the device has the forgery-proof cryptographic signature of its manufacturer.

While viruses and malicious files can also enter the Intranet networks by means other than through the infected USB drives, the scope of this invention is directed to the solving the vulnerabilities posed by the current USB drives, since the virus can travel or "ride on the thumb drive" to the clean host controller just as easily as from a contaminated host controller to a clean thumb drive. Our invention will: (1) prevent the USB drive intended or assigned for secured network to be used on a non-secured network or host controller.

At the very minimum, our invention will rule out possibility that the virus/malware came from the sloppy/promiscuous handling of flash drives; and (2) Prevent sharing USB drives.

In this respect, our invention differs from and improves upon the prior art attempts to provide computer network security, including secure USB flash drives

Institutions need no longer "hope" or "expect" that their employees do the "right thing" by practicing safe cyber security habits. It is therefore highly desirable to have method and means which would: (1) Ensure that the employees would simply have no choice but to practice safe cyber security discipline as this will be done automatically for them since in many cases security is not often on the minds of computer users, even the technically able ones, and; (2) greatly enhance/complement some other well-established USB security procedures. Our patent addresses these two cyber security points mentioned above.

In addition to preventing virus migrating from a contaminated USB drive to a secure network or from unsecured network to a clean USB drive, another very desirable and unique method and means of our invention is to discourage or prevent employees from downloading confidential information to a personal USB drive and use the said information for a non-authorized purpose. Whereas the institutional or corporate-supplied USB drives are trackable, personal thumb drives are much more difficult or impossible to track. Our preferred embodiment will prevent such non-authorized downloading.

An unencrypted and otherwise unprotected USB drive with highly confidential, restricted or classified information from secure Intranet networks can become lost and thus vulnerable in divulging its contents if found. As the result, still another very desirable method and means of our invention is to make the access to the information on the lost encrypted or unencrypted USB drives more difficult. This part of our preferred embodiment is especially important in the light of: (1) the national economies becoming increasingly dependent on Intranet and Internet interconnectivity controlling and operating critical infrastructures such as utilities and transportation through the specialized unsecured industrial control systems as programmable logic controllers (PLCs) and process software as SCADA where there is serious concern and potential of cyber sabotage or terrorism; and (2) the unjustifiable habit of customs officers at some international entry points to confiscate laptops, iPhone, flash drives and passwords for invasive monitoring and copying. Those passengers, including professional businesspersons on legitimate business trip for meetings unwilling to surrender the same due to competitive trade secrets issues, risk of being refused the entry to the country.

The contamination of secured Intranet network with virus or malware from an unsuspected USB drive can result from an employee inserting an USB drive of unknown origin, the so-called "booby-trapped USB", into the secure host or computer to see what it contains, only to have the USB drive deliver a malware or a damaging high voltage spike to the computer, a clear case of security breach. The anti-virus or malware protection software in the system may not be able to detect and protect the network against new malware on time, especially in the cases of "zero day vulnerability". The epidemic of harmful data breach such as malware or virus infection through the use of USB drives was documented in a 2011 Microsoft study analyzing data from more than 600 million systems worldwide in the first half of 2011. Couple examples of economically devastating virus or malware spread by USB drives are Stuxnet worm and Flame modular computer malware. Our patent protects against the "booby-trapped USB".

Application of RFID technology is also, like the USB drives, widespread worldwide in every market segment, both private and government. RFID is a remote sensing and control technology that can be used to identify and track every imaginable product from the manufacturer to the final consumer. RFID is also being used on credit cards and personal identification badges in access control applications to verify identity and to ensure personal and institutional security.

RFID system consists of three parts: **(1)** Data collection reader or interrogator. This is usually a microcontroller-based unit with a wound output coil, peak detector hardware, comparators and firmware designed to transmit energy to a tag and read information back from it by detecting the backscatter modulation. The reader can continuously generates a RF carrier wave. When the passive tag is within its reading range, this RF signal powers it. **(2)** Data-providing tags or transponders that are imbedded or attached to the tracked items. Tag incorporates a silicon memory chip with on-board rectification bridge and other radio frequency (RF) front-end devices, which contains an RF modulating circuitry, control logic, non-volatile memory, and a wound or printed input/output coil and a tuning capacitor for lower frequencies. **(3)** A processing unit, such as microcontroller, interfacing to various peripherals. In operation, readers query tags by transmitting an interrogatory RF signal transmitted in a half-duplex mode on the system's operating frequency, and tags respond with stored data. To achieve this exchange the readers include an RF transceiver, antenna and a controller capable of managing the communication protocol and data.

The reader starts to transmit RF at selected frequency when powered ON and may remain active for a considerable time. The near-by tag will receive the RF energy through its internal antenna. The received RF energy is converted to electrical power, which is sufficient for the tag to transmit its internal data or unique identification number (UID) back to the reader via RF signal. Once the reader receives the RF signal from the tag, it will transmit the received data or UID to the external device, such as reader microcontroller on the reader's microcontroller board, by serial communication over the wire for verification or processing.

There is a wide range of reader modules available in the market and usage, with the one of the more common and user-friendly being the EM-18 reader module, which will be used as an example in this preferred embodiment. This reader module will read the RFID passive tag and re-transmit the tag's data or UID to the properly configured microcontroller board such as **Arduino UNO™,** for example. Of the two types of available readers "fixed" or "movable", our invention is based on the "fixed" type.

From the several types of tags, our preferred embodiment will use a passive tag whereby the active reader transmits signals to the passive tag and receives the signals from the tag. Passive tags receive their power to communicate and broadcast (uplink) its data with the reader from the electromagnetic field generated by the reader. Blank tags can be written with an electronic product code or unique identification number (UID). For our preferred embodiment therefore, it is highly desirable to use a low frequency (LF) and fixed type reader operating at about 125 kHz, using active reader and the passive tag.

### SUMMARY OF THE INVENTION

Above objects have been resolved by the communication device according to claims 1 to 6, the portable memory device, the arrangement and the system according to the further independent claims.

Further embodiments are indicated by the depending subclaims.

According to a first aspect a communication device for enabling communication between a data processing unit and a portable memory device is provided, comprising:
a port for receiving the portable memory device;
a reader device configured for contactlessly identifying an identification tag attached to the portable memory device,
a control unit configured to allow communication with the memory device via the port if the reader device has identified the memory device.

Moreover, the communication device may further include a detection switch configured to be mechanically or magnetically or optically activated by a proximity of a switch activation element, wherein the control unit is configured to allow communication with the memory device via the port when the detection switch has been activated.

Particularly, the port may have a number of lines for communicating with the memory device, at least two of them are switchable via line switches wherein the control unit is configured to close at least one of the line switches by activation of the detection switch.

Moreover, the control unit may be configured to close at least another one of the line switches by detecting that the detection switch has been activated and that the identifying of the identification tag has occurred within a predetermined time period after the identification tag has been identified.

It may be provided that the communication device may comprise a housing having a recess in which bottom portion the port is located wherein at least one of the reader device and the detection switch is located at a side wall portion of the recess.

Moreover, the reader device and the detection switch may be arranged on opposite side wall portions of the recess.

According to a further aspect a portable memory device for storing data is provided, wherein an identification tag is provided at a body of the memory device, wherein the identification tag is capable of identifying the memory device.

A switch activation element may be provided to activate a corresponding detection switch when inserted into a port of a communication device, wherein particularly the activation element comprises a structural or magnetic or optical element.

For the portable memory device, the memory device may have a USB connector with (connector) lines which are reconfigured to be incompatible with a standard USB port, wherein particularly the reconfiguration consists of interchanged data lines.

According to a further aspect the above an arrangement of the above communication device and the above portable memory device may be provided , wherein the identification tag and the reader device are arranged so that when a connector of the memory device is inserted into the port the identification tag comes into proximity of the reader device so that communication with the memory device is allowed, wherein particularly the switch activation element and the detection switch are arranged so that when the connector of the memory device is inserted into the port the switch activation element triggers the detection switch so that communication with the memory device is enabled.

According to a further aspect, a system is provided comprising the above communication device and a data processing unit wherein the communication device is separate from the data processing unit, wherein particularly one of the communication device is formed in a separate housing and the communication device is formed as a plug-in module for the data processing unit.

The communication device may be connected to the data processing unit via one or more non-standard interfaces.

The data processing unit may be configured to only communicate via any portable memory device via the communication device.

The data processing unit may be configured to only communicate via the above portable memory device via the communication device.

### BRIEF DESCRIPTION OF THE DRAWINGS

**Fig. 1** is an example of a simplified plan view of a secure computer network such as Intranet.
**Fig. 1A** is a detail of the DFD RFID reader panel or pre-host as part of a stand-alone computer system.
**Fig. 2** is a plan view of a typical USB drive modified into a Dedicated Flash Drive or "DFD" of this preferred embodiment.
**Fig. 2A** is the edge-view of the DFD.
**Fig. 3** illustrates a right side-view of a communication device of Fig. 1A, depicting our invention's typical DFD RFID reader panel or "pre-host".
**Fig. 3A** depicts an enlarged detail of Fig. 3.
**Fig. 3B** illustrates **Fig. 3** with partially opened rear access door of pre-host.
**Fig. 4** illustrates DFD plug and port pinouts.
**Fig. 5** illustrates interchanging pins 1 and 4 on the DFD and USB ports.
**Fig. 5A** illustrates a partial control circuit.
**Fig. 5B** illustrates a detail of RFID reader wiring.
**Fig. 5C** illustrates a detail of LED indicator wiring.
**Fig. 5D** illustrates a wiring detail of cable **9,** cable connector **9A** mating with port **9B** on the host computer. The port **9B** is connected to host's motherboard header **9F** via cable **9C,** connector **9D** and pins **9E.**

### DETAILED DESCRIPTION OF THE PREFERRED EMBODIMENTS

To illustrate the manner in which the advantages and features of our invention are obtained, a more particular description of the invention will be given with references to the attached drawings, with reference to desktops on secure network. It should be understood that other embodiments may be utilized and structured or logical changes may be made without departing from the scope of the present invention.

While the illustrated drawings or figures depict the invention using discrete electrical and electronic components assembled and installed in an enclosure separate from the host desktop computer, it is understood that the same can be accomplished using solid state, integrated circuits, which are mounted on integral cards or boards inside the laptop host. The following detailed descriptions, therefore, are not to be interpreted in a limiting sense, and the scope of the present invention is defined by the appended Claims. Therefore, in the drawings below:

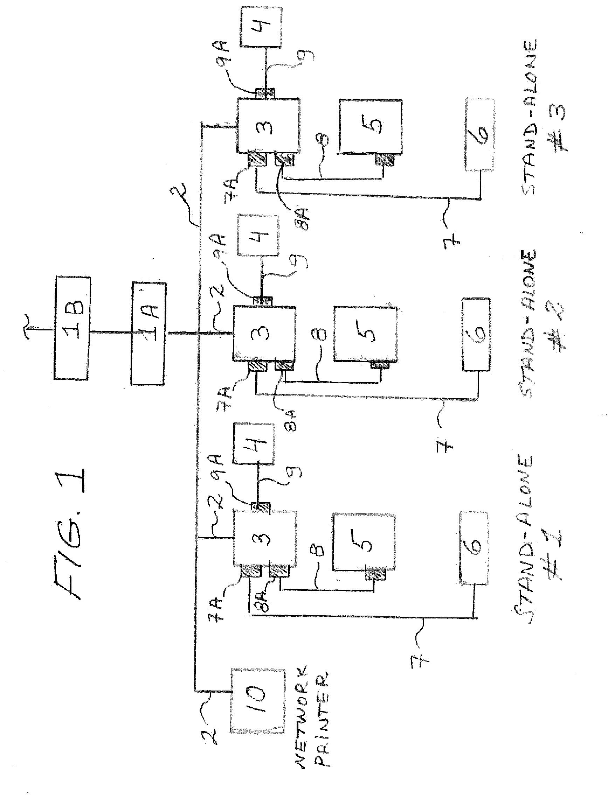

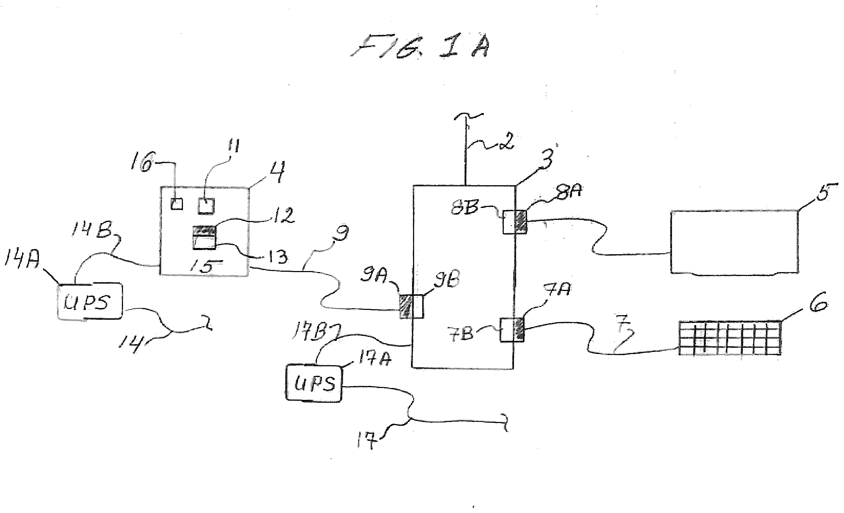

**Fig. 1** is an example of a simplified block diagram view of a secure computer network such as Intranet, whereby object or item **1A,** part of "firewall", is a secure network filtering router; item **1B** is a proxy server; item **2** are network signal or data lines or link among individual hosts controllers or client computers; item **3** are stand-alone computers, clients or hosts (desktops or laptops). The secure network may include additional servers and internal hosts or clients. The said secure computer network is protected from Internet by the latest firewall software, encryption and other means known to those of skilled in the art.

Item **4** is a dedicated communication device such as a flash drive Radio Frequency Identification (RFID) reader panel or "pre-host" of our invention which has for the purpose of simplicity a single USB female socket, receptacle or port mounted in this reader panel instead of having it mounted on the actual host computer **3** as it is currently done in Prior Art. The word "dedicated" as used in the expression "dedicated flash drive" (or "DFD") reader panel or pre-host, refers to the modified USB flash drives that can be plugged only in the RFID reader panel utilizing them, as evident in subsequent figures and discussions. Since the standard USB drive will be modified internally, we will henceforth and when appropriate refer to the USB drive as a "dedicated flash drive" or DFD.

Since the host controller or host computer of object/item **3** will not have any DFD ports for the plug-in of peripheral devices indicated herein as such ports would allow user to download secure data to a standard and unauthorized USB flash drive and thus defeat the purpose of this invention, both ends of their cable connectors should be non-compatible with existing USB flash drives configurations.

Standard USB hub would be unusable in this instance as it would not be able to pass the verification test posed to each inserted USB drive by the pre-host. The term "pre-host" as used in our preferred embodiment indicates a unique and separate stand-alone device or an integrated circuit on a chip or card inside a laptop, from the actual host controller or client computer (desktop or laptop) of item **3.** The basic function of the reader panel or pre-host is to verify the authenticity of a thumb drive, whether it is a standard USB or a DFD, before the data in the thumb drive is uploaded and allowed to communicate with the actual host computer and secure network. Standard USB drive will certainly not be authenticated and allowed to communicate with the host computer.

Item **5** is a monitor device; item **6** is a keyboard device; item **7** is a keyboard-to-computer data cable; item **7A** is connector which is not compatible either with standard USB drives or DFD; item **8** is a monitor-to-computer data cable; item **8A** is connector which is not compatible with either standard USB drives or DFD; item **9** is a RFID reader panel-to-host data cable; item **9A** is connector which is not compatible either with standard USB drives or DFD; and item **10** is a network printer device.

Connectors **7A, 8A** and **9A** from devices **6, 5** and **4** respectively, are of different type, model and pin configuration from either the standard USB or DFD flash drives and connectors.

Since one application of any RFID reader is "access control", our invention will utilize the "access control" aspect of the RFID technology since the object of our invention is that only the data from the virus-free or non-contaminated flash drive will have the "access" to the host or client computers and the secure network such as the Intranet. It is only when the flash drive has been authenticated by RFID reader's control circuit inside the pre-host panel that the data inside flash drive will be allowed to upload into the host computer **3.** In essence, the pre-host is a "data gatekeeper" for the host computer. While our preferred embodiment discusses modification of USB-A flash drives, it should be understood that this includes the USB 3.0, 2.0 or 1.1 Type A or similar flash drives.

**Fig. 1A** is a detail of a single RFID reader panel or pre-host as part of a stand-alone computer system in which item **2** is a network communication cable; **3** is a host controller/computer (desktop or laptop); the communication device **4** may be a stand-alone reader panel containing all the normally required DFD sockets/ receptacles or ports normally provided on the host controller/ computer **3,** modified for our DFD connectors. For the purpose of simplicity, our preferred illustrated embodiment depicts a single DFD port **12.** To have more than one port on the pre-host, it would be a simple issue of correspondingly adjusting or "scaling-up" the number of ports, electronic components and circuits inside the pre-host. Since the reader will interrogate one tag at a time there will not be problems regarding collision of data.

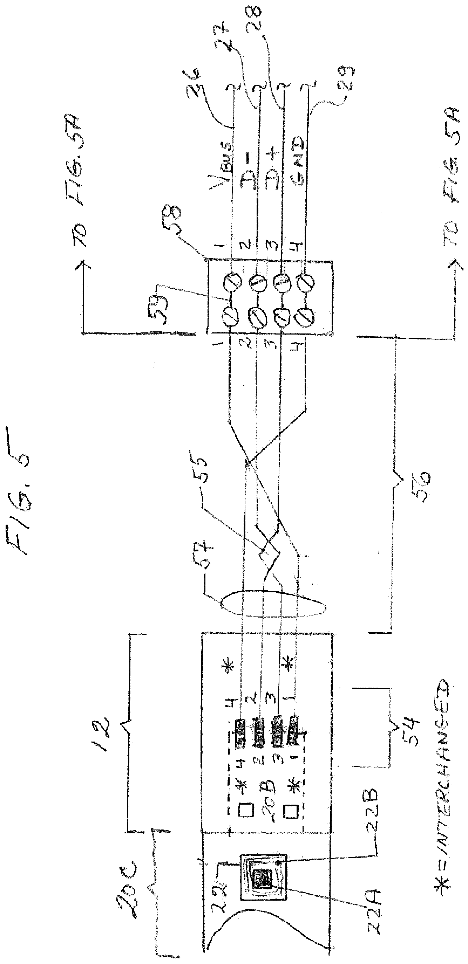

Item **5** is a monitor device; **6** is a keyboard device; **7** is a keyboard-to-computer data cable; **8** is a monitor-to-computer data cable; **9** is a DFD RFID reader panel-to-host data cable; items **7B, 8B** and **9B** (see **Fig. 5E**) are the ports of the type, model and pin configuration compatible with connectors **7A, 8A** and **9A,** but neither a standard USB-A nor a DFD can be plugged directly into **7B, 8B** and **9B;** item **11** is a feed-back signal (FBS) such as a buzzer or a LED indicator light over the recessed female DFD port, socket or receptacle **12.** The FBS announces to the user that DFD is "cleared" or verified by the pre-host to upload and communicate with the host computer **3.**

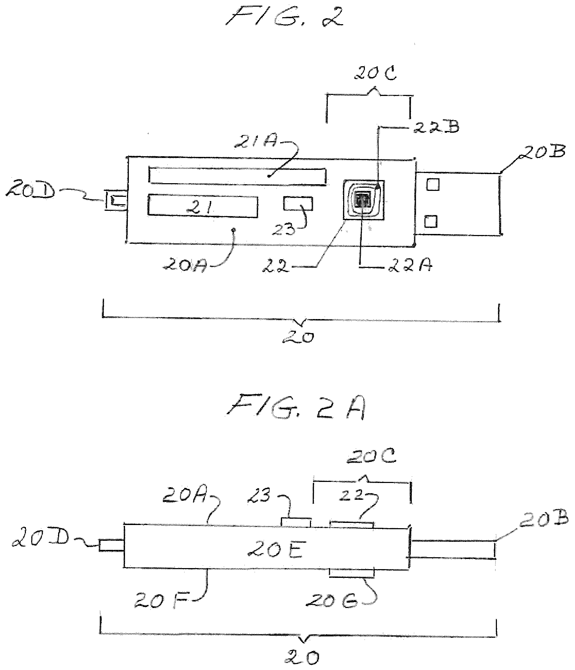

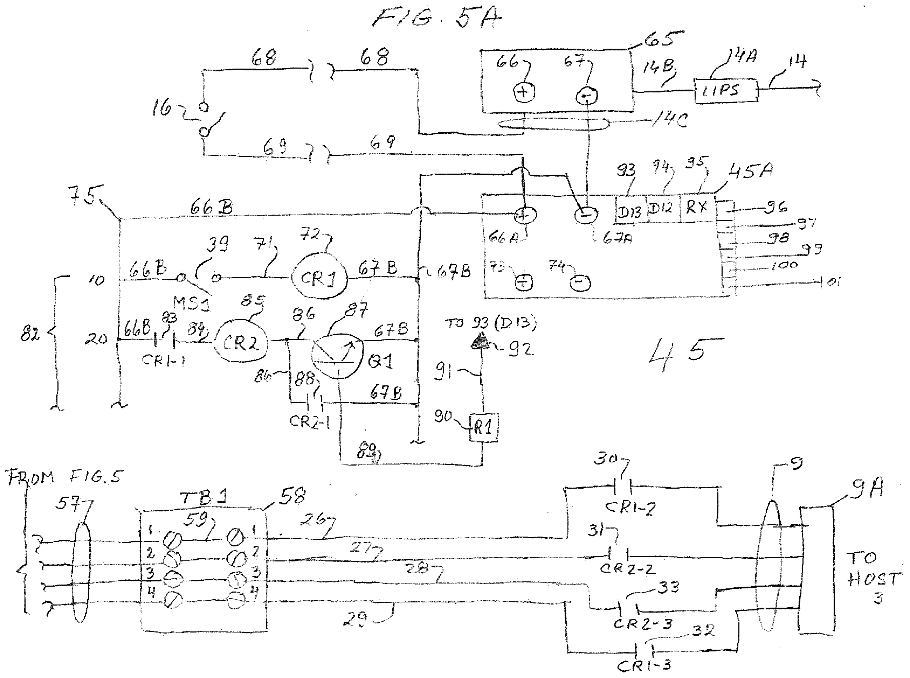

Item **13** is a recess in the face of the communication device **4** containing a RFID reader, DFD port **12** (not depicted) and a Normally Open (N/O) magnetic micro switch (not depicted) for detecting presence of inserted male DFD connector **20B** (see **Fig. 2****);** item **14** is a 120-240v AC power cable; **14A** is an uninterruptible power supply (UPS); **14B** is a 120/240v AC power cable from **14A to** the communication device **4;** item **15** is a front surface or face of the communication device **4; 16** is a toggle switch 1 (see **Fig. 5A****); 17** is a 120-240v AC power cable; **17A is** uninterruptible power supply (UPS); **17B** is a 120-240v AC from **17A** to item **3.**

**Fig. 2** is a plan view of a typical standard type A, 4-pin USB drive, (USB-A) modified into, and referred to in this preferred embodiment as "Dedicated Flash Drive" (DFD), herein referred to dedicated portable memory device **20** whereby: dedicated portable memory device **20** references the DFD; **20A** is a main body, compartment or case of DFD, made of a robust metallic material that is covered with plastic or ceramic to prevent radio frequency (RF) reflection, as the metal is a difficult to tag without specifically tuning the tag. Due to its robust metal construction, attempting to tamper with internal circuitry of the dedicated portable memory device **20** would definitely damage the body and internal circuitry, along with making the drive useless and obvious of physical tampering.

As it pertains to our invention, the term "Dedicated" as in Dedicated Flash Drive (DFD) mentioned previously means that the standard USB flash drive has been modified internally per our invention such that it is the only type of flash drive that can be used by specific host computers (by way of intermediary RFID reader panel or pre-host) since the standard host computer's USB ports have also been modified so as not to accept standard USB flash drive data but only the data from DFD through the pre-host and a non-USB compatible connector and port. Per our invention, the host computer on a secure network will not have the type of ports that would accept either DFDs or standard USB-A drives or USB-compatible connectors. The host computer will communicate with DFDs via secure "intermediary" pre-host device only through connectors and ports incompatible with USB-A types.

Item **20B** is a male DFD connector or plug; item **20C** is frontal part of case **20A** which contains the surface-mounted RFID passive tag (identification tag) **22; 20D** is a chain ring; item **21** is a unique manufacturer's serial number, which is associated with institution, department, employee or assigned user. For security reasons, the actual name of the institution for which it was manufactured or sold to is classified but can be obtained directly from the manufacturer. Likewise, the name of the department, employee or the assigned user can only be obtained from the institution's IT department.

Item **21A** is a sticker with a notice: "WARNING! DO NOT PLUG INTO A NON-SECURE NETWORK PORT". The identical notice also appears on the reverse side of **20A** (not showed); identification tag **22** is a passive RFID tag or transponder, which further enhances the security of the secure network by linking a particular RFID unique identification number (UID) code to specific pre-host controller or department within the organization.

The identification tag **22** that gets its power from the reader through inductive coupling method, operates at about 125-134 kHz for our preferred embodiment and consists of a silicon chip **22A** and a well impedance- matched LC antenna circuit **22B** bonded to the plastic or ceramic substrate **20A.**

Since the distance between the tag and the reader is very close at port **12** and the reader's power very low, there should be little or no problems with local jurisdiction regarding interference due to RFID's frequency and power. The said antenna element can be either of a wound flat coil, traditional etching element or of a conductive ink.

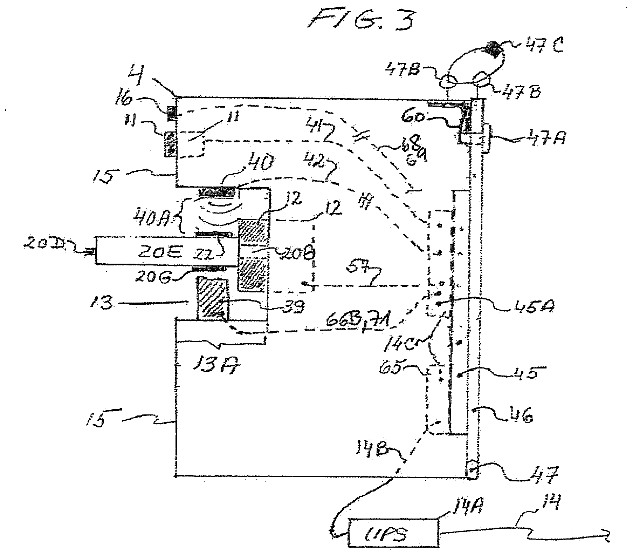

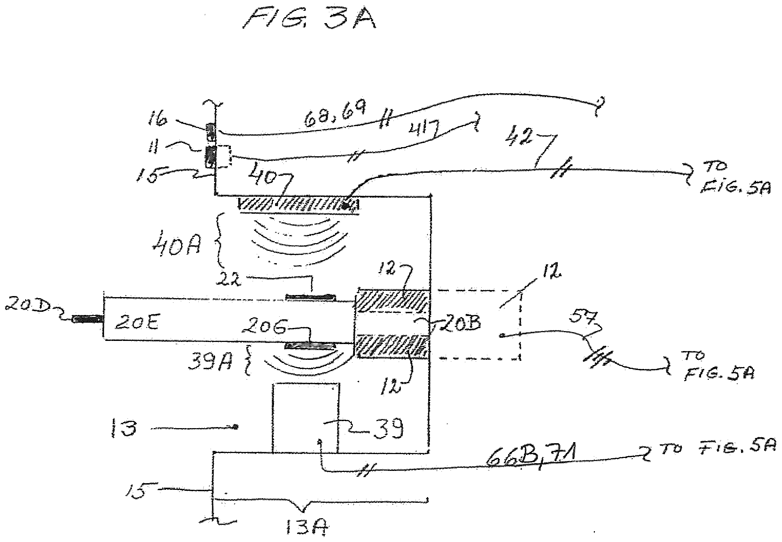

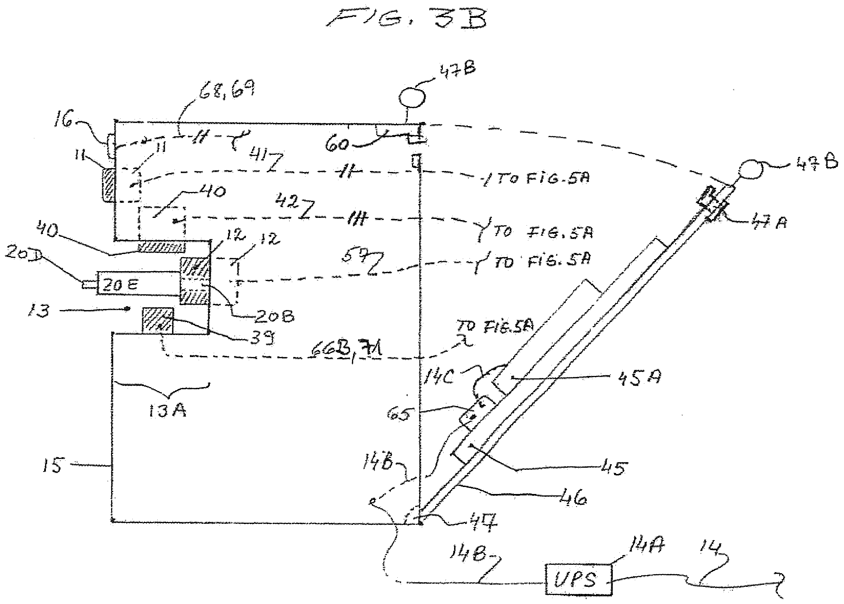

When the DFD is inserted into female DFD port (socket or receptacle) **12,** the entire tag falls within the recessed part of the communication device **4** and directly under and in a close proximity to the RFID reader or interrogator **40** (see **Figs. 3****,** **3A****)** so as to ensure excellent RF coupling, gain, directivity and circular polarization. The plastic or ceramic coating over the metallic DFD body or case ensures good RF coupling with the antenna circuit **22B** pasted on top of case. Thus, before the DFD can connect its power and data lines **(Vbus, GND, D- and D+**) to the host computer, the information from the RFID identification tag **22** must be confirmed by the pre-host microcontroller circuit, such as tag's unique identification number (UID). The tag can generally store from 1KB-4KB of data or more, using one of the more common data formats/protocols for RFID tags, such as **EM4100™** for example.

Item **23** is the standard sliding switch that retracts the connector **20B** into the main case or compartment **20A.**

**Fig. 2A** depicts the edge-view of the dedicated portable memory device **20** where item **20A** is the top surface of main body or case; **20B** is the male DFD connector or plug; **20D** is the chain ring; **20E** is the edge of DFD; **20F** is bottom surface or the reverse side of **20A; 20G** is a switch activation element, such as a thin magnet or magnetic strip below the identification tag **22** and attached to **20F.** The thin strip **20G** serves to magnetically attract and close the arm of N/O micro-switch (detection switch **39** in **Fig. 5A****)** when **20B** is fully inserted into port **12;** item **23** is the sliding switch that retracts the connector **20B** into the main compartment/case **20A.**

**Fig. 3** illustrates a right elevation view of typical RFID pre-host, the communication device **4** where item **20B** is the male DFD connector inserted into port **12; 20E** is the edge of **20; 11** is a feed-back signal (FBS) such as a buzzer or a LED indicator light over the recessed female DFD port/socket or receptacle **12.** The FBS announces by a brief buzzer or a brief LED light when the identification tag **22** () is read successfully; item **13** is a recess; item **13A** is a depth of the recess; **16** is a toggle switch 1 (see **Fig. 5A****)** which turns ON the RFID reader circuit before/after DFD is inserted into port **12;** the detection switch **39** is a recessed Normally Open (N/O) micro switch below the inserted DFD's front part **20C** containing the identification tag **22.** When the DFD's part **20B** is inserted into port **12,** the attached switch activation element **20G** trips the N/O magnetic micro-switch (detection switch) **39** to CLOSE, initiating the reader module **40,** to start interrogating DFD's RFID identification tag chip **22,** which is inside the reader's "interrogation zone", via RF waves **40A** to verify and compare the chip's unique identification number (UID) against the recorded data of the same on file in the RFID reader's microcontroller block **45A.**

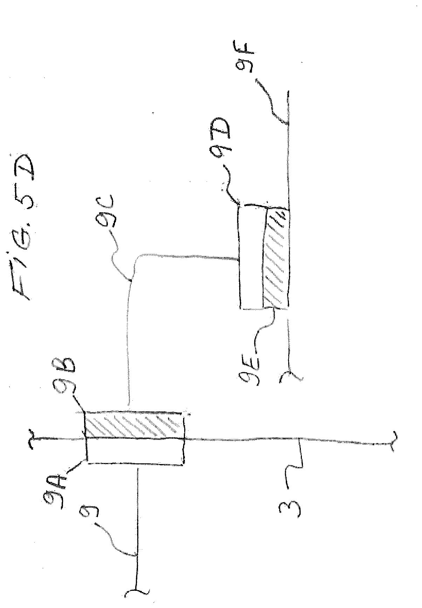

When all the defined preliminary login conditions are met, the control circuits of pre-host allow DFD to upload and communicate directly with host computer item (data processing unit) **3** via cable **9,** cable connector **9A** and others (see **Fig. 5D**).

Item **14** is a 120/240v AC power cable; **14A** is UPS; **14B** is a 120/240v AC power cable into item **65; 14C** is a 12Vdc power cable to items **45A, 75** and **16** (see **Fig. 5A****);** item **15** is a front surface of the DFD pre-host item **4; 40** is the aforementioned RFID reader module mounted on top of recess above port **12.** The placement of RFID reader module **40** is such that the RFID reader's antenna is directly above and at close proximity to the identification tag **22** for best magnetic coupling, data acquisition or read rates, while operating at minimum power to avoid creating RF interference.

When the DFD is inserted into port **12,** due to near field or close proximity (approximately less than 5 cm) of the passive RFID identification tag **22** to the RFID reader **40,** the operating frequency of the RFID reader can operate at low frequency, or about 125 kHz. For our invention the near field is less than 5 cm, thus the operating frequency could be within the said frequency range and in good "interrogation zone". For this reason, the operation of this invention should pose little or no problem for local/national jurisdiction regarding RF safety and interference issues.

Item **40A** are RF waves from the reader to tag and conversely; item **41** is a pair of power wires for the feed-back signal item (FBS) such as a buzzer or a LED indicator light **11; 42** are wires or ribbon cable for RFID reader module **40,** such as **Arduino™ EM-18** for example; item **45** is a control unit, i.e.a control circuits board containing discrete control circuits and RFID microcontroller board **45A** secured to the rear access door **46;** item **46** is a rear access door of pre-host communication device **4;** item **47** is a door hinge to allow the rear door to fold down 90 degrees; **47A** is a lock securing **46** to the **4; 47B** are two rings on top of **46** and **4; 47C** is a wire through the **47B** and joined in a security seal to prevent tampering with the circuits inside the communication device **4.** Since the RFID reader's UID inside the microcontroller board **45A** on control unit **45** may need to be updated occasionally by IT tech using standard USB drive, the access to USB port should be controlled or restricted, except to the authorized IT technician.

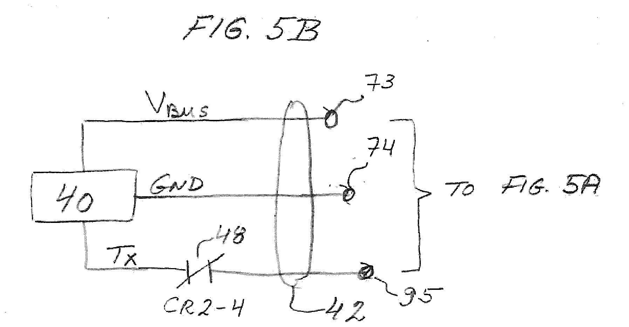

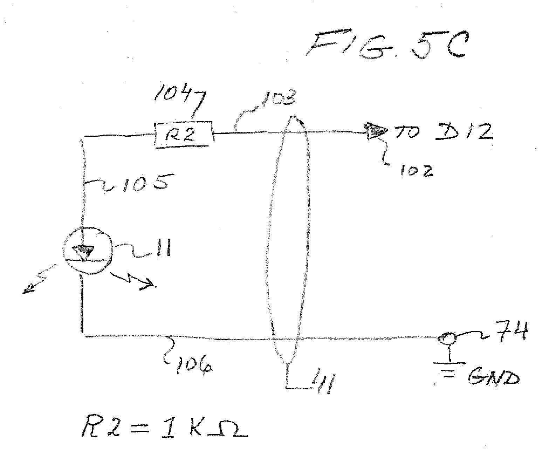

Item **57** are wires/ ribbon cable from the port **12** to terminal block **58** (**Fig. 5**); item **60** is an angled metal for the key latch **47A;** items **66** and **71** are a pair of wires in ladder diagram **75** ( rung 10) used to energize item **72** (CR1 in **Fig. 5A**).

Item **65** is a 12 **Vdc** power supply (see **Fig. 5A**) which consists of a transformer, rectifier, regulator circuit for some electrical devices on the control unit **45.**

**Fig. 3A** illustrates an enlarged detail of some of items on **Fig. 3****,** where port **12** is a DFD port; item **11** is a feed-back signal (FBS) such as a buzzer or a LED indicator light; item **16** is a toggle switch 1 (see also **Fig. 5A****); 20B** is the male DFD connector inserted into port **12; 20D** is the chain ring; **20E** is the edge of the dedicated portable memory device **20; 22** is a RFID identification tag; **39** is a detection switch, such as a N/O magnetic micro-switch (MS1); **39A** is a magnetic field between the switch activation element **20G** and detection switch **39; 40** is the aforementioned RFID reader module; **40A** are RF waves between the reader **40** and the identification tag **22; 42** is a ribbon cable between the RFID reader module **40** and the microcontroller board **45A,** containing three wires: **73, 74** and **95 (Rx)** (see **Fig 5B**). Wire **73** is from **+5Vbus** post terminates on reader module's **Vcc** terminal; wire **74** is from **GND** post of item **45A** and terminates on reader's module's **GND** terminal; **Rx** is wire from item **95** and terminates on reader module's **Tx** terminal.

Item **57** are wires/ ribbon cable from the port **12** to terminal block 58 (in **Figs. 5****,** **5A**);
**66B** and **71** are a pair of wires in ladder diagram **75** used to energize item **72** (CR1 in **Fig. 5A**); items **68** and **69** are wires in and out of item **16** (SW1) in **Fig. 5A****.**

**Fig. 3B** illustrates **Fig. 3** with partially opened rear access door **46; 14** is a 120/240V AC cable; **14A is** UPS; **14B** is a 120/240V AC cable to **65; 14C** is a pair of 120/240V AC power wires from **65** to **45A; 16** is a toggle switch 1 (SW1); item **41** is a cable with 2 wires for the FBS such as LED light indicator or a buzzer (see **FIG. 5B****,** **5C****,** **5D**); item **42** is a cable from the reader module (such as for example **EM-18**), containing wires for **Tx, GND** and **Vcc** and plug into the microcontroller board **45A,** such as **Arduino™ UNO** for example. Item **47A** is lock such as tubular cam or disc tumbler drawer lock, for example; item **95** (**Rx**), item **74 (GND)** and item **73** (**Vbus**).

Item **57** is a cable from port **12** to item **58** in **FIGS. 5****,** **5A****;** items **68** and **69** are wires in and out of item **16** (SW1).

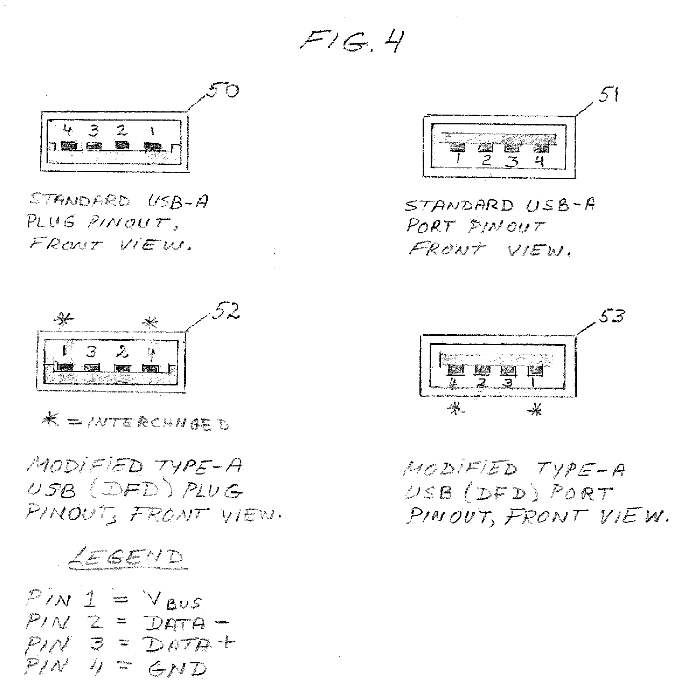

**Fig. 4** is a comparison of frontal cross-sectional views of standard USB-A and DFD plugs' and ports' pinouts, where item **50** is a standard USB-A connector or plug pinout diagram with 4, 3, 2, 1- pin sequence; **51** is a corresponding standard USB-A receptacle or port pinout diagram; item **52** is a modified USB-A connector or plug (here referred to as DFD) pinout diagram of our preferred embodiment with a new pin sequence of 1, 3, 2, 4 since the pins 1 (**Vbus**) and 4 (**GND**) are interchanged (marked with *); **53** is a modified USB-A port into DFD port pinout diagram of our embodiment. The pin sequencing in a DFD is different from that in a standard USB-A drive, plug and port. Thus, while externally identical in appearance, their internal wiring sequence makes them functionally non-interchangeable. This is why a DFD cannot operate correctly in a standard USB port and the standard USB-A drive cannot operate in a modified (DFD) port.

The purposes of altering the existing 4, 3, 2, 1 standard pin sequencing or configuration are: (1) to increase the difficulty for a lost and unencrypted DFD to be read by an unauthorized finder on his/her computer which has a different and non-matching USB-A / DFD port pin configuration; and (2) to prevent the user on secure network from downloading classified/confidential files to a standard personal USB-A thumb drive from his/her host controller/computer, since the pre-host or communication device port would have different pin configuration from the inserted personal standard USB-A thumb drive.

Different departments on the same secure Intranet network may use a different pin configuration on their DFD from those illustrated in our preferred embodiment, depending on their security levels. The security considerations for the swapping data pins needs to be of such great importance that simply requiring new UID for the DFD would not be sufficient. Thus a DFD from department A with higher security level cannot be used on department's B pre-host with lower security level, and conversely. This concern or compartmentalization would probably be most appropriate to IT techs during the troubleshooting network systems of different security levels. Troubleshooting networks of different security levels would require that the IT tech have DFDs with different pinouts in addition to having a correspondingly higher security clearance along with appropriate passwords/passphrases.

**Fig.5** illustrates wiring diagram of the interchanged pin 1 (**+Vbus**) with pin 4 (**GND**) (indicated by *) on the male DFD's connector **20B** and interchange of identical pins of the port 12 will produce correct coupling of plug and port pins at item **54.** The set of four wires in item **57** from the port pins are (from the top down): **GND** (pin 4), **Data** - (pin 2), **Data +** (pin 3) and **+ Vbus** (pin 1). These wires are crossed in the short space **56** between port **12** and their corresponding connecting terminal block **58,** where they are terminated in correct DFD sequence (from the top down) 1, 2, 3, 4 for further signal processing and verification on control unit **45** and RFID microcontroller board **45A.** On the terminal block **58,** the identical pins are connected together internally **59.** In addition to the four wires crossing each other in space **56,** the **Data** - and **Data +** wires are also twisted **55** for most of their entire length to prevent cross talk.

Attempting to insert a standard USB-A thumb drive into port **12** of the pre-host will result in USB-A's plug **GND** (pin 4) contacting port's **+Vbus** (pin 1) while plug's **+ Vbusₛ** (pin 1) contacting port's **GND** (pin 4). There would be a mismatch of pins and the thumb drive would fail to operate correctly, prevent unauthorized copying of secure data to a non-authorized thumb drive. Similarly, inserting an unencrypted DFD into a standard USB-A port will meet similar problem. The manufacturer of DFDs and RFID's pre-host with altered pin sequence should be a "trusted source", since there could be number of different combinations of pin reconfigurations and such configurations should remain classified or confidential.

**Fig. 5A** illustrates control unit **45,** involving action of detection switch **39** (MS1), where the item **14** is a 120/240v AC power cord; **14A** is an UPS; **14B** is a power cable to 12Vdc power supply **65; 14C** are **+12Vdc** input lines to power supply for microcontroller board **45A;** item **16** is a toggle switch 1 (SW1) which turns ON the microcontroller board **45A;** item **65** is a block consists of a transformer, rectifier and regulator circuit for some electrical devices on the control unit **45** and microcontroller board **45A;** item **66** is a **positive** terminal on item **65;** item **66A** is a **+12 Vdc** terminal, input to the **45A; 66B** is a positive rail of ladder diagram **75; 67** is a **negative /GND** terminal on item **65; 67A** is a **negative /GND** terminal, input to **45A; 67B** is a **GND** rail for ladder diagram **75; 68** and **69** are positive wires to and from **16** (SW1); **75** is a ladder diagram based on the relay logic and **+12 Vdc** source; item **39** is a detection switch, such as an N/O magnetic micro-switch (MS1) which will close when the DFD is inserted into port **12** and the magnet **20G** on the bottom of DFD pulls the N/O switch contacts into CLOSE position. (Conversely, when the DFD is pulled out of port **12,** the N/O micro-switch **39** returns to OPEN position, de-energizing **72** (CR1) and cascading all pre-host's Normally Open Held Closed (NOHC) contacts CR1-1, CR1-2, CR1-3, CR2-1, CR2-2, CR2-3 and close CR2-4 to open and to disconnect all communication between DFD and the host computer and to isolate host computer data lines from pre-host and to allow the reader module to transmit RF again.)

Item **71** is a wire conductor to element **72** (CR1); **72** is a coil of 4PDT control relay 1 (CR1) which becomes energized upon closure of the detection switch **39** (MS1). Energized CR1 closes three N/O contacts: **83** (CR1-1) which places **Vcc** voltage **(+12Vdc)** on wire **84** upstream of relay coil **85** (CR2); contacts **30** (CR1-2); contacts **32** (CR1-3). Items **73** and **74** are positive and negative outputs from microcontroller board **45A.** Contacts 30, 31, 32, 33 are further referred to as line switches CR1-2, CR1-3, CR2-2,CR2-3.

When the DFD is inserted into port **12,** with the reader's microcontroller board **45A** already energized and reader interrogating the tag which was brought close to the reader module, coil CR1 is energized and its **three** N/O contacts (CR1-1, CR1-2, CR1-3) closed. If the received tag's UID data matches the data in the microcontroller, the reader's pin **93** (digital **D13**) will go HIGH (**+5 Vbus**) for few seconds. This will bias relay driver, item **87** (Q1) through item **90** (R1) to act as a transistor switch and conduct for a few seconds, energizing **85** (CR2). Energized CR2 closes three N/O contacts and opens one N/C contact. The "sealing" contacts, item **88** (CR2-1) retains the current path for coil **85** (CR2) once the item **87** (Q1) stops conducting after few seconds.

The energized coil CR2 will close the N/O contacts **88** (CR2-1) in rung 30, and the two N/O contacts **31** (CR2-2), **33** (CR2-3). The "sealing" contacts **88** (CR2-1) retains the coil **85** (CR2) energized once the **87** (01) stops conducting after few seconds. In addition, item **85** (CR2) will OPEN an N/C contacts, item **48** (CR2-4) in **Fig. 5B****.** The purpose of opening the **48** (CR2-4) is to stop the reader module needlessly transmitting once the tag has been authenticated with the DFD remaining in the port **12.** The four closed contacts: **30** (CR1-2), **31** (CR2-2), **32** (CR1-3) and **33** (CR2-3) now provide continuous power and data path from DFD's four pins to host computer **3** motherboard header through data cable **9,** keyed connectors **9A** and **9B** on host computer (see **Fig. 5D**).

This does not mean that DFD has to automatically start communicating with the host even with the added security provided by interchanging pin configuration of our preferred embodiment. There is an option. By carefully selecting DFDs with security features which come with some current USB drives requiring user to enter password into the host computer before "unlocking" the DFD for full communication with the host, the IT Administrator will be able to further enhances the network security.

Item **82** are sets of rungs in item **75** ladder diagrams of this embodiment, starting with rung numbers 10. Item **93** is digital pin **D13** which goes momentarily HIGH when the RFID reader microcontroller authenticates the tag's UID; **94** is a digital pin **D12** used to drive a LED or buzzer feedback signal (FBS); **95** is **Rx** terminal which connects to reader module's **Tx** pin through a wire **Rx/Tx** in the ribbon cable **42** (**Fig. 5B**).

Depending on the brand, there could be several additional connectors on the pre-host reader microcontroller board **45A** for troubleshooting such as: item **96** is power connector; **97** is I/O port; **98** is diagnostic LED; **99** is RS-232 or RS-485 port; **100** is Ethernet port; **101** is a LAN LED indicator.

**Fig. 5B** depicts a wiring detail of reader module **40,** where N/C contacts **48** (CR2-4) are in series with **Tx/Rx** pin on the module **40.** The **Vcc (Vbus)**connects to item **73** on microcontroller board **45A; GND** is connected to item **74** on microcontroller board **45A; Tx/Rx** wire is connected to item **95** on microcontroller board **45A.** Item **48** OPENS, disabling reader module **40** when **D13** goes HIGH (+**5Vdc**).

**Fig. 5C** depicts a wiring detail of a feedback system using an LED indicator item **11,** where **102** is a connector to item **94 (D12)** on the microcontroller board **45A; 103** is a wire to a series resistor **104** (R2); **105** is a wire to the LED item **11;** item **106** is **GND** wire connected to item **74.**

**Fig. 5D** depicts a wiring detail of cable **9,** cable connector **9A** mating with port **9B** on the host computer. The port **9B** is connected to host's motherboard header **9F** via cable **9C,** connector **9D** and pins **9E.**

## Claims

1. Communication device for enabling communication between a data processing unit and a dedicated portable memory device, comprising:
a port for receiving the dedicated portable memory device;
a reader device configured for contactlessly identifying an identification tag attached to the dedicated portable memory device,
a control unit configured to allow communication with the memory device via the port if the reader device has identified the memory device.

2. Communication device according to claim 1, further including:
a detection switch configured to be mechanically or magnetically or optically activated by a proximity of a switch activation element,
wherein the control unit is configured to allow communication with the dedicated portable memory device via the port when the detection switch has been activated.

3. Communication device according to claim 2, wherein the port has a number of lines for communicating with the memory device, at least two of them are switchable via line switches wherein the control unit is configured to close at least one of the line switches by activation of the detection switch.

4. Communication device according to claim 3, wherein the control unit is configured to close at least another one of the line switches by detecting that the detection switch has been activated and that the identifying of the identification tag has occurred within a predetermined time period after the identification tag has been identified.

5. Communication device according to any of the claims 2 to 4, comprising a housing having a recess in which bottom portion the port is located wherein at least one of the reader device and the detection switch is located at a side wall portion of the recess.

6. Communication device according to claim 5, wherein the reader device and the detection switch arranged on opposite side wall portions of the recess.

7. Dedicated portable memory device for storing data, wherein an identification tag is provided at a body of the memory device, wherein the identification tag is capable of identifying the memory device.

8. Dedicated portable memory device according to claim 7, including a switch activation element to activate a corresponding detection switch when inserted into a port of a communication device, wherein particularly the activation element comprises a structural or magnetic or optical element.

9. Dedicated portable memory device according to claim 7 or 8, wherein the memory device has a USB connector with lines which are reconfigured to be incompatible with a standard USB port, wherein particularly the reconfiguration consists of interchanged data lines.

10. Arrangement of a communication device according to any of the claims 1 to 6 and a dedicated portable memory device according to any of the claims 7 to 9, wherein the identification tag and the reader device are arranged so that when a connector of the dedicated portable memory device is inserted into the port the identification tag comes into proximity of the reader device so that communication with the memory device is allowed, wherein particularly the switch activation element and the detection switch are arranged so that when the connector of the memory device is inserted into the port the switch activation element triggers the detection switch so that communication with the memory device is enabled.

11. System comprising a communication device according to any of the claims 1 to 6 and a data processing unit wherein the communication device is separate from the data processing unit, wherein particularly one of the communication device is formed in a separate housing and the communication device is formed as a plug-in module for the data processing unit.

12. System according to claim 11 wherein the communication device is connected to the data processing unit via one or more non-standard interfaces.

13. System according to claim 11 or 12, wherein the data processing unit is configured to only communicate via any portable memory device via the communication device.

14. System according to any of the claims 11 to 13, wherein the data processing unit is configured to only communicate via a portable memory device according to any of the claims 7 to 9 via the communication device.

## Amended claims

### Amended claims in accordance with Rule 137(2) EPC.

1. Communication device (4) for enabling communication between a data processing unit (3) and a dedicated portable memory device (20), comprising:
a port (12) for receiving the dedicated portable memory device (20);
a reader device (40) configured for contactlessly identifying an identification tag (22) attached to the dedicated portable memory device (20),
a control unit (45) configured to allow communication with the memory device (20) via the port (12) if the reader device (40) has identified the memory device (20);
a detection switch (39) configured to be mechanically or magnetically or optically activated by a proximity of a switch activation element (20G),
wherein the control unit (45) is configured to allow communication with the dedicated portable memory device (20) via the port (12) when the detection switch (39) has been activated; wherein the port (12) has a number of lines for communicating with the memory device (20), at least two of them are switchable via line switches (CR1-2, CR1-3, CR2-2,CR2-3) wherein the control unit (45) is configured to close at least one of the line switches (CR1-2, CR1-3, CR2-2,CR2-3) by activation of the detection switch (39).

2. Communication device (4) according to claim 1, wherein the control unit (45) is configured to close at least another one of the line switches (CR1-2, CR1-3, CR2-2,CR2-3) by detecting that the detection switch (39) has been activated and that the identifying of the identification tag (22) has occurred within a predetermined time period after the identification tag (22) has been identified.

3. Communication device (4) according to any of the claims 1 to 2, comprising a housing having a recess in which bottom portion the port is located wherein at least one of the reader device (40) and the detection switch (39) is located at a side wall portion of the recess.

4. Communication device (4) according to claim 3, wherein the reader device (40) and the detection switch (39) arranged on opposite side wall portions of the recess.

5. Communication device according to any of the claims 1 to 4 wherein a data processing unit is provided separately from the data processing unit, wherein particularly the communication device (4) is formed in a separate housing and the communication device is formed as a plug-in module for the data processing unit.

6. Communication device according to claim 5 wherein the communication device is connected to the data processing unit via one or more non-standard interfaces.

7. Communication device according to claim 5 or 6, wherein the data processing unit is configured to only communicate via any portable memory device (20) via the communication device.

8. Communication device according to any of the claims 5 to 7, wherein the data processing unit is configured to only communicate via a portable memory device (20) according to any of the claims 7 to 9 via the communication device.

9. Dedicated portable memory device (20) for storing data, wherein an identification tag (22) is provided at a body of the memory device (20), wherein the identification tag (22) is capable of identifying the memory device (20); wherein a switch activation element (20G) is provided to activate a corresponding detection switch (39) when inserted into a port of a communication device (4), wherein particularly the activation element (20G) comprises a structural or magnetic or optical element.

10. Dedicated portable memory device (20) according to claim5, wherein the memory device has a USB connector with lines which are reconfigured to be incompatible with a standard USB port, wherein particularly the reconfiguration consists of interchanged data lines.

11. Arrangement of a communication device (4) according to any of the claims 1 to 4 and a dedicated portable memory device (20) according to any of the claims 9 to 10, wherein the identification tag (22) and the reader device (40) are arranged so that when a connector of the dedicated portable memory device (20) is inserted into the port the identification tag (22) comes into proximity of the reader device (40) so that communication with the memory device (20) is allowed, wherein particularly the switch activation element (20G) and the detection switch (39) are arranged so that when the connector of the memory device (20) is inserted into the port the switch activation element (20G) triggers the detection switch (39) so that communication with the memory device (20) is enabled.
